# EUROPEAN PATENT APPLICATION

(11) **EP 4 629 344 A1**
(43) Date of publication of application: **08.10.2025**
(21) Application number: 23897532.0
(22) Date of filing: 16.11.2023
(51) Int. Cl.: H01M 4/62, C08F 20/54, C08F 20/56, H01G 11/06, H01G 11/38, H01M 4/13, H01M 4/134, H01M 4/139, H01M 4/1395

(54) **POLYMER FOR POWER STORAGE DEVICE**

(30) Priority: 30.11.2022 JP 2022191648; 15.11.2023 JP 2023194655
(71) Applicant: Kao Corporation, Chuo-ku, Tokyo 103-8210 (JP)
(72) Inventor: KAWAMUKAI, Hiroshi, Tokyo 103-8210 (JP); OKI, Kazuo, Tokyo 103-8210 (JP); KAMIMURA, Shigehisa, Tokyo 103-8210 (JP)
(74) Representative: Hoffmann Eitle
(86) International application number: PCT/JP2023/041318
(87) International publication number: WO 2024/116881

(57) **Abstract**

An aspect of the present disclosure relates to a polymer for a power storage device. The polymer contains a constitutional unit represented by the following formula (I). The content of the constitutional unit of the formula (I) is more than 95% by mass. In the formula (I), R¹ represents a hydrogen atom or a methyl group, R² represents a hydrogen atom, a hydrocarbon group having 1 to 4 carbon atoms, or a straight- or branched-chain hydrocarbon group having 1 to 4 carbon atoms and 1 to 3 hydroxyl groups, and R³ represents a straight- or branched-chain hydrocarbon group having 1 to 4 carbon atoms and 1 to 3 hydroxyl groups.

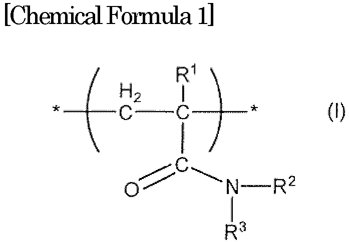

## Description

### Technical Field

The present disclosure relates to a polymer for a power storage device, a binder composition, a paste for a negative electrode of a power storage device, a negative electrode for a power storage device, and a power storage device.

### Background Art

The demand for power storage devices is steadily increasing with, e.g., the recent spread of smartphones, the zero-emission controls in the automobile market, and the expanded use of natural energy. Thus, power storage devices are required to have a small size, a light weight, and a large capacity. In particular, power storage devices with higher output and higher energy density are becoming more and more necessary for automobiles or the like. To meet these requirements, the development of power storage devices such as a lithium ion secondary battery, an alkali ion secondary battery, an electric double-layer capacitor, and a lithium ion capacitor has advanced considerably.

The power storage devices typically include an electrode which is obtained by applying a composite layer containing, e.g., an active material to a piece of metal fail. In order to prevent the composite layer from peeling off the metal foil, a binder is added to the composite layer.

Styrenebutadiene rubber (SBR) is most widely used as a binder for a negative electrode of a power storage device. In recent years, binders that can be used for the formation of the composite layer have been developed to further improve the performance of the power storage devices.

For example, WO 2019/159706 A1 (Patent Document 1) proposes a binder composition that contains a graft copolymer consisting of a backbone polymer and a branch polymer bonded to the backbone polymer. The backbone polymer includes a hydroxyl group-containing vinyl monomer unit in a predetermined proportion and has a weight-average molecular weight within a predetermined range. The branch polymer includes a water-soluble monomer unit.

WO 2017/130910 A1 (Patent Document 2) proposes a binder composition that contains a water-soluble polymer and an amine compound. The water-soluble polymer includes a (meth)acrylamide monomer unit.

### Disclosure of the Invention

An aspect of the present disclosure relates to a polymer for a power storage device. The polymer contains a constitutional unit represented by the following formula (I). A content of the constitutional unit of the formula (I) is more than 95% by mass.

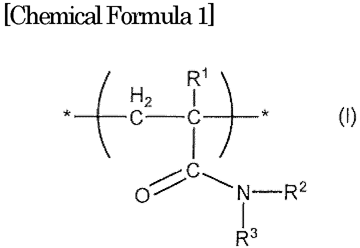

In the formula (I), R¹ represents a hydrogen atom or a methyl group, R² represents a hydrogen atom, a hydrocarbon group having 1 to 4 carbon atoms, or a straight- or branched-chain hydrocarbon group having 1 to 4 carbon atoms and 1 to 3 hydroxyl groups, and R³ represents a straight- or branched-chain hydrocarbon group having 1 to 4 carbon atoms and 1 to 3 hydroxyl groups.

An aspect of the present disclosure relates to a binder composition for a power storage device. The binder composition contains the polymer for a power storage device of the present disclosure.

An aspect of the present disclosure relates to a paste for a negative electrode of a power storage device. The paste contains a silicon-based negative electrode active material and the polymer for a power storage device of the present disclosure.

An aspect of the present disclosure relates to a negative electrode for a power storage device. The negative electrode includes a current collector and a composite layer provided on the current collector. The composite layer contains a silicon-based negative electrode active material and the polymer for a power storage device of the present disclosure.

The present disclosure relates to a power storage device that includes the negative electrode for a power storage device of the present disclosure.

### Description of the Invention

A graphite-based negative electrode active material has been widely used as a negative electrode active material for a power storage device. On the other hand, a silicon-based negative electrode active material attracts attention in terms of high capacity.

However, the silicon-based negative electrode active material undergoes a significant volume change as it expands and contracts during charge and discharge. Therefore, an electrode (negative electrode) containing the conventional binder composition has been found insufficient to improve the charge-discharge cycle characteristics of a power storage device.

Moreover, an electrode (negative electrode) composed of the silicon-based negative electrode active material and the conventional binder composition has also been found insufficient to improve the discharge capacity (fast discharge capacity) and the fast discharge capacity retention rate (i.e., the ratio of the discharge capacity during slow discharge to the discharge capacity during fast discharge) of a power storage device when the power storage device is charged and discharged at a high current. The fast discharge capacity retention rate is the ratio of the discharge capacity during slow discharge to the discharge capacity during fast discharge. The power storage device that needs to be charged and discharged at a high current requires a high fast discharge capacity retention rate.

There is still room for improvement in the conventional binder composition to better enable the power storage device that has a negative electrode containing the silicon-based negative electrode active material to achieve excellent charge-discharge cycle characteristics and a high fast discharge capacity retention rate.

The present disclosure provides a polymer for a power storage device that is able to improve the charge-discharge cycle characteristics and the fast discharge capacity retention rate of a power storage device that has a negative electrode containing a silicon-based negative electrode active material. The present disclosure also provides a binder composition for a power storage device, a slurry composition for a negative electrode of a power storage device, a negative electrode for a power storage device, and a power storage device, each of which includes the polymer for a power storage device.

### [Polymer for power storage device]

The present disclosure is based on the findings that, in one or more embodiments, using a specific polymer as a binder for a power storage device that has a negative electrode containing a silicon-based negative electrode active material can reduce the expansion of the negative electrode due to repeated charging and discharging of the power storage device, and thus can improve the battery characteristics of the power storage device.

In one aspect, the present disclosure relates to a polymer for a power storage device (also referred to as a "polymer of the present disclosure" in the following). The polymer of the present disclosure contains a constitutional unit represented by the formula (I) (also referred to as a "constitutional unit I" in the following). The content of the constitutional unit of the formula (I)is more than 95% by mass. In one or more embodiments, the polymer of the present disclosure is a polymer composition for a power storage device that includes a polymer containing more than 95% by mass of the constitutional unit I.

In one or more embodiments, the polymer of the present disclosure is able to improve the charge-discharge cycle characteristics of the power storage device that has the negative electrode containing the silicon-based negative electrode active material.

The mechanism of the effects of the present disclosure is not fully clear, but can be assumed as follows.

The silicon-based negative electrode active material expands and contracts during charge and discharge, and the theoretical value of a volume change exceeds 300%. The silicon-based negative electrode active material may be cracked or crushed by this volume change, which may cause a coating (SEI) formed on the surface of the silicon-based negative electrode active material to fall off

The polymer of the present disclosure contains the constitutional unit I and therefore is highly adsorbed on the silicon-based negative electrode active material. The adsorption of the polymer can help to reduce not only cracking or crushing of the silicon-based negative electrode active material during charge and discharge, but also falling of the SEI.

Moreover, the polymer of the present disclosure can improve both the adhesion between a negative electrode layer (composite layer) and a current collector and the adhesion between particles of the silicon-based negative electrode active material, thereby increasing the strength of the electrode (silicon-based negative electrode).

Further, the content of the constitutional unit I in all the constitutional units of the polymer of the present disclosure is set to more than the predetermined amount (95% by mass). This configuration can sufficiently ensure the adhesiveness as described above, and also can make the results of a charge-discharge cycle test better. The presence of the hydroxyl group and the amide bond in the constitutional unit I enhances the affinity of the constitutional unit I for the silicon-based negative electrode active material, and thus can facilitate both the adhesion between the negative electrode layer (composite layer) and the current collector and the adhesion between particles of the silicon-based negative electrode active material.

The power storage device including the polymer of the present disclosure has a good discharge capacity even in a fast charge-discharge cycle test and can achieve a high fast discharge capacity retention rate. The polymer of the present disclosure is expected, e.g., to enable rapid acceleration of electric vehicles and to be applied to power tools. This may be because, in addition to the improved affinity and adhesiveness, the mutual network of amide groups, which is formed with the hydrocarbon group and the hydroxyl group present in the same molecule, promotes the movement of Li⁺ and contributes to a reduction in internal resistance.

However, the present disclosure should not be construed as being limited to the above mechanism.

In one aspect, the present disclosure provides a polymer for a power storage device that is able to improve the charge-discharge cycle characteristics and the fast discharge capacity retention rate of a power storage device that has a negative electrode containing a silicon-based negative electrode active material.

### <Constitutional unit represented by formula (I): constitutional unit I>

The polymer of the present disclosure contains a constitutional unit represented by the following formula (I) (i.e., a constitutional unit I). The constitutional unit I may be one type or a combination of two or more types.

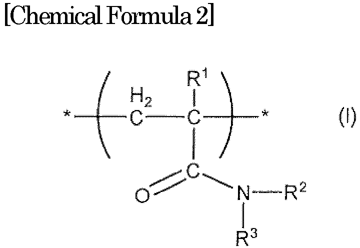

In the formula (I), R¹ represents a hydrogen atom or a methyl group, and is preferably a hydrogen atom from the viewpoint of improving the charge-discharge cycle characteristics of the power storage device that has the negative electrode containing the silicon-based negative electrode active material.

In the formula (I), R² represents a hydrogen atom, a hydrocarbon group having 1 to 4 carbon atoms, or a straight- or branched-chain hydrocarbon group having 1 to 4 carbon atoms and 1 to 3 hydroxyl groups, and is preferably a hydrogen atom from the viewpoint of improving the charge-discharge cycle characteristics of the power storage device that has the negative electrode containing the silicon-based negative electrode active material.

In the formula (I), R³ represents a straight- or branched-chain hydrocarbon group having 1 to 4 carbon atoms and 1 to 3 hydroxyl groups, and is preferably a straight- or branched-chain hydrocarbon group having 2 to 3 carbon atoms and 1 hydroxyl group, and more preferably a straight-chain hydrocarbon group having 2 carbon atoms and 1 hydroxyl group from the viewpoint of improving the charge-discharge cycle characteristics of the power storage device that has the negative electrode containing the silicon-based negative electrode active material.

The content of the constitutional unit I in all the constitutional units of the polymer of the present disclosure is preferably more than 95% by mass, more preferably 98% by mass or more, even more preferably 99% by mass or more, and further preferably 100% by mass from the viewpoint of improving the charge-discharge cycle characteristics of the power storage device that has the negative electrode containing the silicon-based negative electrode active material.

Examples of the monomer forming the constitutional unit I include at least one selected from the group consisting of N-hydroxymethylacrylamide, N-hydroxyethylacrylamide, N-(2-hydroxypropy])acrylamide, N-hydroxymethylmethacrylamide, N-hydroxyethylmethacrylamide, N-(2-hydroxypropyDmethacrylamide, and N-[tris(hydroxymethyDmethyl]acrylamide. The monomer forming the constitutional unit I is preferably at least one selected from the group consisting of N-hydroxyethylacrylamide and N-(2-hydroxypropy])acrylamide, and more preferably N-hydroxyethylacrylamide from the viewpoint of improving the charge-discharge cycle characteristics of the power storage device that has the negative electrode containing the silicon-based negative electrode active material.

### <Additional constitutional unit: constitutional unit II>

The polymer of the present disclosure may further contain an additional constitutional unit other than the constitutional unit I (also referred to as a "constitutional unit II" in the following). The content of the constitutional unit II in all the constitutional units of the polymer of the present disclosure is less than 5% by mass, preferably 2% by mass or less, more preferably 1% by mass or less, and further preferably 0% by mass from the viewpoint of improving the charge-discharge cycle characteristics of the power storage device that has the negative electrode containing the silicon-based negative electrode active material.

Examples of the monomer forming the constitutional unit II include an acid monomer such as (meth)acrylic acid, a (meth)acrylic acid ester monomer, and a (meth)acrylamide monomer other than the monomer forming the constitutional unit I. The (meth)acrylic acid ester monomer may be, e.g., polyethylene glycol (meth)acrylate or alkyl (meth)acrylate having 12 carbon atoms or less. The (meth)acrylamide monomer other than the monomer forming the constitutional unit I may be, e.g., dimethylacrylamide, diacetone acrylamide, or tertbutylacrylamide.

The polymer of the present disclosure may be, e.g., at least one selected from the group consisting of a hydroxyethylacrylamide polymer, a hydroxyethylacrylamide/polyethylene glycol (meth)acrylate copolymer, and a hydroxyethylacrylamide/acrylic acid copolymer.

The polymer of the present disclosure can be produced by polymerizing, e.g., the monomer forming the constitutional unit I and optionally the monomer forming the constitutional unit II. The polymerization method may be any known method such as an emulsion polymerization method, a solution polymerization method, a suspension polymerization method, or a bulk polymerization method

The weight average molecular weight of the polymer of the present disclosure is preferably 50,000 or more, more preferably 100,000 or more, even more preferably 300,000 or more, and further preferably 500,000 or more from the viewpoint of the adhesion between the silicon-based negative electrode active material and the current collector. Furthermore, the weight average molecular weight of the polymer is preferably 3,000,000 or less, more preferably 2,000,000 or less, and further preferably 1,000,000 or less from the viewpoint of handleability of a negative electrode paste. In the present disclosure, the weight average molecular weight is a value measured by gel permeation chromatography (GPC), and the details of the measurement conditions will be described in Examples.

In one or more embodiments, the polymer of the present disclosure can be used as a binder for a negative electrode of a power storage device. An aspect of the present disclosure relates to use of the polymer of the present disclosure as a binder for a negative electrode of a power storage device.

### [Binder composition for power storage device]

In one aspect, the present disclosure relates to a binder composition for a power storage device (also referred to as a "binder composition of the present disclosure" in the following). The binder composition of the present disclosure contains the polymer of the present disclosure. In one or more embodiments, the binder composition of the present disclosure is able to improve the charge-discharge cycle characteristics of the power storage device that has the negative electrode containing the silicon-based negative electrode active material.

### <Polymer>

The polymer of the present disclosure contained in the binder composition of the present disclosure may be one type or a combination of two or more types.

The content of the polymer in the binder composition of the present disclosure is preferably 1% by mass or more, more preferably 3% by mass or more, and further preferably 5% by mass or more from the viewpoint of blending properties in the production of an electrode. Furthermore, the content of the polymer is preferably 50% by mass or less, more preferably 45% by mass or less, and further preferably 40% by mass or less from the viewpoint of preventing poor handleability due to an increase in viscosity. When the polymer of the present disclosure is a combination of two or more types, the content of the polymer is the total content of the two or more types.

### <Solvent>

In one or more embodiments, the binder composition of the present disclosure is a solution containing the polymer of the present disclosure and a solvent. The solvent may be, e.g., water.

### <Other components>

The binder composition of the present disclosure may further contain other components to the extent that they do not interfere with the effects of the present disclosure, in addition to the polymer of the present disclosure and the solvent. The other components include, e.g., at least one selected from the group consisting of a surfactant, a thickener, an antifoaming agent, a dispersing agent, an antiseptic, and a neutralizing agent.

The binder composition of the present disclosure can be prepared by mixing, e.g., the polymer of the present disclosure and optionally the other components in the solvent with a known method. The mixing process may use, e.g., a ball mill, a bead mill, or an ultrasonic disperser.

### [Paste for negative electrode of power storage device]

The polymer and the binder composition of the present disclosure can be used to prepare a paste for a negative electrode of a power storage device. In one aspect, the present disclosure relates to a paste for a negative electrode of a power storage device (also referred to as a "negative electrode paste of the present disclosure" in the following). The negative electrode paste of the present disclosure contains a silicon-based negative electrode active material and the polymer of the present disclosure. In one or more embodiments, the negative electrode paste of the present disclosure contains a silicon-based negative electrode active material and the binder composition of the present disclosure. In one or more embodiments, the negative electrode paste of the present disclosure is a silicon-based negative electrode paste for a power storage device (i.e., a silicon-based negative electrode paste). The negative electrode paste of the present disclosure is able to improve the charge-discharge cycle characteristics of the power storage device that has the negative electrode containing the silicon-based negative electrode active material.

### <Silicon-based negative electrode active material>

In one or more embodiments, the silicon-based negative electrode active material may be, e.g., silicon (Si), an alloy containing silicon, SiO, SiOₓ, or a Si-containing material that is coated with or combined with conductive carbon. The silicon-based negative electrode active material may be one type or a combination of two or more types.

The average particle size of the silicon-based negative electrode active material is preferably 0.01 µm or more, more preferably 0.15 µm or more, and further preferably 0.5 µm or more from the viewpoint of improving the charge-discharge cycle characteristics of the power storage device. Furthermore, the average particle size of the silicon-based negative electrode active material is preferably 20 µm or less, more preferably 10 µm or less, and further preferably 5 µm or less from the viewpoint of improving the charge-discharge cycle characteristics of the power storage device. The average particle size of the silicon-based negative electrode active material is a volume average particle size (D₅₀) measured by a laser diffraction scattering method. The volume average particle size (D₅₀) represents a point on the cumulative volume distribution curve at which the cumulative volume of particles, calculated in ascending order of particle size, accounts for 50% of the total volume of particles, assuming that the total volume of particles in the volume-based particle size distribution is 100%. The volume average particle size (D₅₀) can be measured with a laser beam diffraction/scattering particle size distribution analyzer and specifically by a method as described in Examples.

The content of the silicon-based negative electrode active material in the negative electrode paste of the present disclosure is preferably 0.5% by mass or more, more preferably 1.5% by mass or more, and further preferably 2% by mass or more from the viewpoint of increasing the capacity of the power storage device. Furthermore, the content of the silicon-based negative electrode active material is preferably 70% by mass or less, more preferably 40% by mass or less, and further preferably 20% by mass or less from the viewpoint of improving the charge-discharge cycle characteristics of the power storage device. When the silicon-based negative electrode active material of the present disclosure is a combination of two or more types, the content of the silicon-based negative electrode active material in the negative electrode paste of the present disclosure is the total content of the two or more types.

### <Polymer>

The polymer of the present disclosure contained in the negative electrode paste of the present disclosure may be one type or a combination of two or more types.

The content of the polymer in the negative electrode paste of the present disclosure is preferably 0.1% by mass or more, more preferably 0.3% by mass or more, and further preferably 0.5% by mass or more from the viewpoint of the adhesion between the polymer and the current collector. Furthermore, the content of the polymer is preferably 10% by mass or less, more preferably 5% by mass or less, and further preferably 3% by mass or less from the viewpoint of increasing the capacity of the power storage device. When the polymer of the present disclosure is a combination of two or more types, the content of the polymer in the negative electrode paste of the present disclosure is the total content of the two or more types.

The ratio of the content of the polymer to the content of the silicon-based negative electrode active material in the negative electrode paste of the present disclosure is such that the content of the polymer is preferably 0.1 part by mass or more, more preferably 1 part by mass or more, and further preferably 5 parts by mass or more with respect to 100 parts by mass of the silicon-based negative electrode active material from the viewpoint of the adhesion between the silicon-based negative electrode active material and the current collector; furthermore, the content of the polymer is preferably 200 parts by mass or less, more preferably 100 parts by mass or less, and further preferably 50 parts by mass or less with respect to 100 parts by mass of the silicon-based negative electrode active material from the viewpoint of increasing the capacity of the power storage device.

### <Dispersion medium>

In one or more embodiments, the negative electrode paste of the present disclosure contains a dispersion medium. The dispersion medium may be, e.g., water.

### <Other components>

The negative electrode paste of the present disclosure may contain other components in addition to the above components. In one or more embodiments, the other components include, e.g., negative electrode active materials other than the silicon-based negative electrode active material, a conductive material, and a thickener.

Examples of the negative electrode active materials other than the silicon-based negative electrode active material include a graphite-based negative electrode active material such as graphite. When the negative electrode paste of the present disclosure contains the graphite-based negative electrode active material, the content of the graphite-based negative electrode active material in the negative electrode paste is preferably 0.5% by mass or more, more preferably 5% by mass or more, and further preferably 10% by mass or more from the viewpoint of improving the charge-discharge cycle characteristics of the power storage device. Furthermore, the content of the graphite-based negative electrode active material is preferably 70% by mass or less, more preferably 60% by mass or less, and further preferably 50% by mass or less from the viewpoint of increasing the capacity of the power storage device. When the graphite-based negative electrode active material is a combination of two or more types, the content of the graphite-based negative electrode active material in the negative electrode paste of the present disclosure is the total content of the two or more types.

The conductive material may be any known conductive material that can be used for the power storage device. Examples of the conductive material include carbon materials such as acetylene black, Ketjen black, graphite, and carbon nanotubes. When the negative electrode paste of the present disclosure contains the conductive material, the content of the conductive material in the negative electrode paste is preferably 0.01% by mass or more, more preferably 0.1% by mass or more, and further preferably 0.2% by mass or more from the viewpoint of the resistance of the power storage device. Furthermore, the content of the conductive material is preferably 2% by mass or less, more preferably 1.5% by mass or less, and further preferably 1% by mass or less from the viewpoint of increasing the capacity of the power storage device. When the conductive material is a combination of two or more types, the content of the conductive material in the negative electrode paste of the present disclosure is the total content of the two or more types.

The thickener may be, e.g., carboxymethyl cellulose (CMC). When the negative electrode paste of the present disclosure contains the thickener, the content of the thickener in the negative electrode paste is preferably 0.1% by mass or more, more preferably 0.2% by mass or more, and further preferably 0.5% by mass or more from the viewpoint of the coating ability of the negative electrode paste. Furthermore, the content of the thickener is preferably 2% by mass or less, more preferably 1.5% by mass or less, and further preferably 1% by mass or less from the viewpoint of increasing the capacity of the power storage device. When the thickener is a combination of two or more types, the content of the thickener in the negative electrode paste of the present disclosure is the total content of the two or more types.

The solid content concentration in the negative electrode paste of the present disclosure is preferably 20% by mass or more, more preferably 30% by mass or more, and further preferably 35% by mass or more from the viewpoint of the productivity of the power storage device. Furthermore, the solid content concentration is preferably 80% by mass or less, more preferably 70% by mass or less, and further preferably 60% by mass or less from the viewpoint of the handleability of the negative electrode paste.

### <Preparation method of negative electrode paste of the present disclosure>

The negative electrode paste of the present disclosure can be prepared by mixing the silicon-based negative electrode active material, the polymer of the present disclosure, and the dispersion medium, and optionally the other components. The mixing process may use, e.g., a ball mill, a bead mill, or an ultrasonic disperser.

### [Negative electrode for power storage device]

The polymer of the present disclosure, the binder composition of the present disclosure, and the negative electrode paste of the present disclosure can be used to produce a composite layer of an electrode (negative electrode) for a power storage device.

In one aspect, the present disclosure relates to a negative electrode for a power storage device (also referred to as a "negative electrode of the present disclosure" in the following). The negative electrode of the present disclosure includes a current collector and a composite layer provided on the current collector. The composite layer contains a silicon-based negative electrode active material and the polymer of the present disclosure. In one or more embodiments, the composite layer of the negative electrode of the present disclosure contains the silicon-based negative electrode active material and the binder composition of the present disclosure. The negative electrode of the present disclosure is able to improve the charge-discharge cycle characteristics of the power storage device that has the negative electrode containing the silicon-based negative electrode active material.

### <Current collector>

The current collector may be selected from conductive materials, including metal fail such as copper foil, nickel foil, aluminum foil, and stainless steel foil.

### <Composite layer>

The composite layer may be obtained by, e.g., applying the negative electrode paste of the present disclosure, which contains the silicon-based negative electrode active material and the polymer of the present disclosure, to the current collector, and drying the negative electrode paste to remove the solvent from the negative electrode paste.

The negative electrode paste (slurry) may be applied to the current collector by any known coating method such as gravure coating, reverse roll coating, direct roll coating, or doctor blade coating.

The negative electrode paste may be applied to either one side or both sides of the current collector. The thickness of the coating may be appropriately determined in accordance with the thickness of the composite layer to be formed after drying.

The negative electrode paste may be dried by any known drying method such as hot air drying, vacuum drying, or infrared radiation drying.

In one or more embodiments, the composite layer contains the silicon-based negative electrode active material and the polymer of the present disclosure, and optionally other components. Examples of the other components may be the same as those of the other components of the negative electrode paste of the present disclosure, as described above.

### (Silicon-based negative electrode active material)

The content of the silicon-based negative electrode active material in the composite layer is preferably 1% by mass or more, more preferably 3% by mass or more, and further preferably 5% by mass or more from the viewpoint of ensuring the battery energy density. Furthermore, the content of the silicon-based negative electrode active material is preferably 99.8% by mass or less, more preferably 80% by mass or less, even more preferably 50% by mass or less, and further preferably 30% by mass or less from the viewpoint of reducing the degradation of the negative electrode due to expansion and contraction of the silicon-based negative electrode active material. When the silicon-based negative electrode active material is a combination of two or more types, the content of the silicon-based negative electrode active material in the composite layer is the total content of the two or more types.

### (Polymer)

The content of the polymer of the present disclosure in the composite layer is preferably 0.2% by mass or more, more preferably 0.5% by mass or more, and further preferably 1% by mass or more from the viewpoint of the adhesion between the silicon-based negative electrode active material and the current collector. Furthermore, the content of the polymer is preferably 20% by mass or less, more preferably 10% by mass or less, and further preferably 5% by mass or less from the viewpoint of increasing the capacity of the power storage device. When the polymer of the present disclosure is a combination of two or more types, the content of the polymer in the composite layer is the total content of the two or more types.

The ratio of the content of the polymer to the content of the silicon-based negative electrode active material in the composite layer is such that the content of the polymer is preferably 0.1 part by mass or more, more preferably 1 part by mass or more, and further preferably 10 parts by mass or more with respect to 100 parts by mass of the silicon-based negative electrode active material from the viewpoint of the adhesion between particles of the silicon-based negative electrode active material; furthermore, the content of the polymer is preferably 200 parts by mass or less, more preferably 100 parts by mass or less, and further preferably 50 parts by mass or less with respect to 100 parts by mass of the silicon-based negative electrode active material from the viewpoint of increasing the capacity of the power storage device.

### (Other components)

When the composite layer of the present disclosure contains the graphite-based negative electrode active material, the content of the graphite-based negative electrode active material in the composite layer is preferably 1% by mass or more, more preferably 10% by mass or more, and further preferably 20% by mass or more from the viewpoint of improving the charge-discharge cycle characteristics of the power storage device. Furthermore, the content of the graphite-based negative electrode active material is preferably 98.8% by mass or less, more preferably 97% by mass or less, and further preferably 95% by mass or less from the viewpoint of increasing the capacity of the power storage device. When the graphite-based negative electrode active material of the present disclosure is a combination of two or more types, the content of the graphite-based negative electrode active material in the composite layer is the total content of the two or more types.

When the composite layer of the present disclosure contains the conductive material, the content of the conductive material in the composite layer is preferably 0.02% by mass or more, more preferably 0.2% by mass or more, and further preferably 0.5% by mass or more from the viewpoint of the resistance of the power storage device. Furthermore, the content of the conductive material is preferably 3% by mass or less, more preferably 2.5% by mass or less, and further preferably 2% by mass or less from the viewpoint of increasing the capacity of the power storage device. When the graphite-based negative electrode active material of the present disclosure is a combination of two or more types, the content of the conductive material in the composite layer is the total content of the two or more types.

When the composite layer of the present disclosure contains the thickener, the content of the thickener in the composite layer is preferably 0.2% by mass or more, more preferably 0.5% by mass or more, and further preferably 1% by mass or more from the viewpoint of the coating ability of the negative electrode paste. Furthermore, the content of the thickener is preferably 5% by mass or less, more preferably 3% by mass or less, and further preferably 2% by mass or less from the viewpoint of increasing the capacity of the power storage device. When the thickener of the present disclosure is a combination of two or more types, the content of the thickener in the composite layer is the total content of the two or more types.

### [Power storage device]

In one aspect, the present disclosure relates to a power storage device (also referred to as a "power storage device of the present disclosure" in the following). The power storage device of the present disclosure includes the negative electrode of the present disclosure. The present disclosure provides a power storage device with excellent charge-discharge cycle characteristics.

In one or more embodiments, examples of the power storage device of the present disclosure include a lithium ion secondary battery, a lithium-air secondary battery, a lithiumsulfur secondary battery, a sodium ion secondary battery, a sodium-sulfur secondary battery, a sodium-nickel chloride secondary battery, an organic radical battery, a zinc-air secondary battery, and an all-solid-state battery.

In one or more embodiments, the power storage device of the present disclosure includes the negative electrode of the present disclosure and an electrolyte solution. The electrolyte solution may contain a solvent and an electrolyte. The solvent may be, e.g., water, an ionic liquid, or carbonates such as ethylene carbonate (EC) and diethyl carbonate (DEC). The electrolyte may be, e.g., metal salts, including a lithium salt such as LiPF₆.

The power storage device of the present disclosure can be produced by, e.g., a known method for producing a power storage device. The method for producing a power storage device may include the following steps: stacking two electrodes (positive electrode and negative electrode) via a separator to form a layered body; winding the layered body or laminating two or more layered bodies according to the shape of a battery; placing the wound electrode body or the laminated electrode body thus obtained in a battery container or a laminated container; putting an electrolyte solution into the container; and sealing the container.

The present disclosure further discloses, e.g., a polymer for a power storage device, a binder composition for a power storage device, and a paste for a negative electrode of a power storage device as follows.
[1] A polymer for a power storage device, comprising a constitutional unit represented by the following formula (I),
   wherein a content of the constitutional unit of the formula (I) is more than 95% by mass: 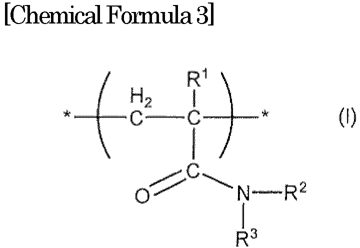 in the formula (I), R¹ represents a hydrogen atom or a methyl group, R² represents a hydrogen atom, a hydrocarbon group having 1 to 4 carbon atoms, or a straight- or branched-chain hydrocarbon group having 1 to 4 carbon atoms and 1 to 3 hydroxyl groups, and R³ represents a straight- or branched-chain hydrocarbon group having 1 to 4 carbon atoms and 1 to 3 hydroxyl groups.
[2] The polymer according to [1], wherein R¹ is a hydrogen atom.
[3] The polymer according to [1] or [2], wherein R² is a hydrogen atom.
[4] The polymer according to any one of [1] to [3], wherein R³ is a straight-chain hydrocarbon group having 2 carbon atoms and 1 hydroxyl group.
[5] The polymer according to any one of [1] to [4], wherein a weight average molecular weight of the polymer is 50,000 or more and 3,000,000 or more.
[6] The polymer according to any one of [1] to [5], wherein the content of the constitutional unit of the formula (I) is 100% by mass.
[7] A binder composition for a power storage device, comprising the polymer according to any one of [1] to [6] and a solvent.
[8] A paste for a negative electrode of a power storage device, comprising a silicon-based negative electrode active material and the polymer according to any one of [1] to [6].
[9] A negative electrode for a power storage device, comprising a current collector and a composite layer provided on the current collector,
   wherein the composite layer contains a silicon-based negative electrode active material and the polymer according to any one of [1] to [6].
[10] A power storage device comprising the negative electrode according to [9].
[11] Use of the polymer according to any one of [1] to [6] to produce a binder composition for a power storage device.
[12] Use of the polymer according to any one of [1] to [6] to produce a paste for a negative electrode of a power storage device.
[13] Use of the polymer according to any one of [1] to [6] to produce a negative electrode for a power storage device.

### Examples

Hereinafter, the present disclosure will be described in detail by way of examples. However, the present disclosure is not limited to the following examples.

### 1. Synthesis of polymers A1 to A3 for power storage device

### [Production Example 1: synthesis of polymer A1]

In a 1 L four-necked separable glass flask was placed 363 g of ion exchanged water and stirred for 0.5 hour in a nitrogen atmosphere. The temperature of the solution in the flask was increased to 75°C, and 83 g of a 60% by mass aqueous solution of 50.0 g of N-hydroxyethylacrylamide (manufactured by KJ Chemicals Corporation) and 60 g of a 1% by mass aqueous solution of 0.6 g of 2,2'-azobis(2-methylpropionamidine) dihydrochloride (manufactured by FUJIFILM Wako Pure Chemical Corporation) were added dropwise into the flask over 1 hour. Then, the solution in the flask was maintained at 75°C for another 4 hours, resulting in a polymer solution (polymer A1) of Production Example 1. The concentration of the polymer in the polymer solution was 10% by mass. The weight average molecular weight of the polymer 1 was 750,000 (see Table 1).

### [Production Examples 2 to 3: synthesis of polymers A2 to A3]

Polymer solutions (polymers A2 and A3) of Production Examples 2 and 3 were each produced in accordance with the method of Production Example 1 by copolymerization of a polymerizable monomer forming the constitutional unit of the formula (I) and a polymerizable monomer (PEG₁₀-A: polyethylene glycol acrylate, the number of moles of EO added: 10, "AE-400" manufactured by NOF CORPORATION) forming the remaining constitutional unit II shown in Table 1. The concentrations of the polymers A2 and A3 in the polymer solutions were 10% by mass, respectively. Table 1 shows the weight average molecular weight of each of the polymers A2 and A3.

**[TABLE 1]**

| Table 1 | Polymer | Constitutional unit I of formula (I) | | | | Additional constitutional unit II | | Weight average molecular weight [ten thousand] |
|---|---|---|---|---|---|---|---|---|
| | | R¹ | R² | R³ | mass% | Type | mass% | |
| Production Example 1 | A1 | H | H | C₂H₄-OH | 100 | - | 0 | 75 |
| Production Example 2 | A2 | H | H | C₂H₄-OH | 90 | PEG₁₀-A | 10 | 53 |
| Production Example 3 | A3 | H | H | C₂H₄-OH | 75 | PEG₁₀-A | 25 | 55 |

### [Measurement of weight average molecular weight]

The weight average molecular weight of the polymer for a power storage device was measured by gel permeation chromatography (GPC). The detailed conditions are as follows.

### <Measurement conditions>

Measuring device: HLC-8320 GPC (manufactured by Tosoh Corporation, detectorintegrated type)
Column: GMPWX_{L} + GMPWXL (anion, manufactured by Tosoh Corporation)
Eluent: 0.2 M phosphate buffer/acetonitrile (=9/1)
Flow rate: 0.5 mL/min
Column temperature: 40°C
Detector: RI detector
Standard substance: polyethylene oxide

### 2. Preparation of silicon-based negative electrode paste

### (Example 1)

A slurry [1] was prepared by mixing 0.16 g of a conductive material (acetylene black, "Li-100" manufactured by Denka Company Limited), 5.5 g of a 1.5% by mass aqueous solution of a thickener (sodium carboxymethyl cellulose, manufactured by FUJIFILM Wako Pure Chemical Corporation), 7.88 g of a graphite-based negative electrode active material (graphite, "MCMG-CF-C" manufactured by Showa Denko KK), and 0.88 g of a silicon-based negative electrode active material (silicon monoxide, manufactured by FUJIFIIM Wako Pure Chemical Corporation).

Next, a slurry [2] was prepared by mixing the slurry [1] with 3.73 g of a 1.5% by mass aqueous solution of a thickener (sodium carboxymethyl cellulose, manufactured by FUJIFILM Wako Pure Chemical Corporation) and 0.53 g of ion-exchanged water.

Subsequently, 1.85 g of a 10% by mass aqueous solution of the polymer A1 of Production Example 1 was added to the slurry [2] to prepare a silicon-based negative electrode paste of Example 1. The components were mixed using "THINKY MIXER (ARV-310)". The silicon-based negative electrode paste contained 0.9% by mass of the polymer, 4.3% by mass of the silicon-based negative electrode active material, 38.4% by mass of the graphite-based negative electrode active material, 0.8% by mass of the conductive material, and 0.67% by mass of the thickener. The content of the polymer in the silicon-based negative electrode paste was 21 parts by mass with respect to 100 parts by mass of the silicon-based negative electrode active material. The silicon-based negative electrode paste had a solid content concentration of 45% by mass.

### (Comparative Examples 1 to 2)

Silicon-based negative electrode pastes of Comparative Examples 1 to 2 were prepared in the same manner as the silicon-based negative electrode paste of Example 1. Comparative Examples 1 to 2 were the same as Example 1 in the composition of the silicon-based negative electrode paste, but different from Example 1 only in the type of the polymer used.

### 3. Production 1 of silicon-based negative electrode

Each of the silicon-based negative electrode pastes thus prepared was applied to a piece of copper fail with a thickness of 20 µm so that the negative electrode capacity density was 6 mAh/cm². Then, the coating (thickness: 380 µm) was dried at 100°C for 12 hours with a vacuum dryer, resulting in a silicon-based negative electrode (i.e., a silicon-based negative electrode having a negative electrode composite layer) that included a current collector and a composite layer (thickness: 120 µm) disposed on the current collector. This silicon-based negative electrode was pressed with a pressing machine. Consequently, the composite layer with a thickness of 100 µm was provided on the current collector in the silicon-based negative electrode (i.e., the silicon-based negative electrode having the negative electrode composite layer). The composition of the electrode (negative electrode) was as follows: 85.3% by mass of graphite; 9.5% by mass of SiO (average particle size: 1 pm); 1.7% by mass of the conductive material 1.5% by mass of the thickener; and 2.0% by mass of the polymer.

### [Measurement of average particle size of silicon-based negative electrode active material]

The volume average particle size (D₅₀) was measured with a laser beam diffraction/scattering particle size distribution analyzer LA-920 (manufactured by HORIBA Ltd).

### 4. Evaluation of negative electrode performance

Power storage devices were produced in the following manner by using the silicon-based negative electrodes of Example 1 and Comparative Examples 1 to 2. Each of the power storage devices was subjected to a charge-discharge cycle test, as described below, to evaluate their charge-discharge cycle characteristics and negative electrode performance.

### [Production of coin cell (power storage device)]

The silicon-based negative electrode was punched to a diameter of 14 mm and pressed A separator with a diameter of 19 mm (manufactured by Hohsen Corp.) and a piece of cainshaped lithium metal foil with a diameter of 15 mm and a thickness of 0.5 mm, which served as a counter electrode, were placed on the pressed silicon-based negative electrode. Thus, a 2032 type coin half-cell was produced The electrolyte solution was 1M LiPF₆ in EC/DEC (volume ratio) = 3/7.

### [Charge-discharge cycle test]

A charge-discharge cycle test was performed on the coin cells thus produced in an environment of 45°C with a charge-discharge tester (ABE 1024 manufactured by Electrofield, Co., Ltd.). The coin cells were charged with a constant current at 0.1 C from the OCV (open circuit voltage) to 0 V, and then charged with a constant voltage for 10 minutes. Further, the coin cells were discharged with a constant current at 0.1 C up to 1.2 V. In this manner, each of the coil cells was repeatedly charged and discharged in 50 cycles. During charge, lithium ions moved from the lithium metal to the silicon-based negative electrode of the coil cell, while the reverse reaction occurred during discharge.

### [Capacity retention rate]

After the charge-discharge cycle test of the coin cells (power storage devices) as described above, the capacity retention rate of each cell was determined by the following formula. Table 2 shows the results. Capacity retention rate = (discharge capacity in the 50th cycle) / (discharge capacity in the 1st cycle)

**[TABLE 2]**

| Table 2 | Polymer | Capacity retention rate (%) after 50 cycles |
|---|---|---|
| Example 1 | A1 | 98 |
| Comparative Example 1 | A2 | 87 |
| Comparative Example 2 | A3 | 70 |

As shown in Table 2, the coin cell of Example 1, which included the polymer A1 containing more than 95% by mass of the constitutional unit I, has a high capacity retention rate in the charge and discharge cycles, as compared to both the coin cells of Comparative Examples 1 and 2, which included the polymers A2 and A3 containing 95% by mass or less of the constitutional unit I, respectively. The results confirm that the use of the polymer A1 improves the charge-discharge cycle characteristics of the power storage device that has the negative electrode containing the silicon-based negative electrode active material

### 5. Production 2 of silicon-based negative electrode (negative electrode for full cell)

Each of the silicon-based negative electrode pastes was applied to a piece of copper foil with a thickness of 20 µm so that the negative electrode capacity density was 2.1 mAh/cm². Then, the coating (thickness: 130 µm) was dried at 100°C for 12 hours with a vacuum dryer, resulting in a silicon-based negative electrode (i.e., a silicon-based negative electrode having a negative electrode composite layer) that included a current collector and a composite layer (thickness: 45 µm) disposed on the current collector. This silicon-based negative electrode was pressed with a pressing machine. Consequently, the composite layer with a thickness of 35 µm was provided on the current collector in the silicon-based negative electrode (i.e., the silicon-based negative electrode having the negative electrode composite layer). The composition of the electrode (negative electrode) was as follows: 85.3% by mass of graphite; 9.5% by mass of SiO (average particle size: 1 pm); 1.7% by mass of the conductive material; 1.5% by mass of the thickener; and 2.0% by mass of the polymer.

### 6. Production of positive electrode for full cell

First, 15 g of a positive electrode active material (NCM523 manufactured by NIPPON CHEMICAL INDUSTRIAL CO., LTD.), 5.98 g of an n-methylpyrrolidone (NMP) solution of polyvinylidene fluoride (PVDF) (KF polymer L #7208 manufactured by KUREHA CORPORATION, solid content: 8%, binder solution), 0.48 g of a conductive material (acetylene black, "Li-100" manufactured by Denka Company Limited), and 12.97 g of a solvent (NMP) were mixed using a rotation-revolution mixer (AR-100 manufactured by THINKY CORPORATION) for 10 minutes, thereby providing a positive electrode paste with a solid content of 46% by mass. Then, the positive electrode paste was applied to a piece of aluminum fail (thickness: 20 µm) and dried at 100°C, resulting in a positive electrode with a positive electrode capacity density of 2.0 mAh/cm².

### [Production of coin cell (power storage device), full cell)]

The positive electrode was punched to a diameter of 13 mm and the silicon-based negative electrode was punched to a diameter of 14 mm. A separator with a diameter of 19 mm (manufactured by Hohsen Corp.) was placed on the positive electrode, and then the silicon-based negative electrode, which served as a counter electrode, was placed on the separator. Thus, a 2032 type coin cell (full cell) was produced The electrolyte solution was 1M LiPF₆ in EC/DEC (volume ratio) = 3/7.

### [Evaluation of full cell]

The battery characteristics (rate performance 5C) of the full cells thus produced were measured. Specifically, the full cells were charged at 0.1 C to 4.2 V and then discharged at 0.1 C to 3 V in an environment of 25°C under the following conditions, so that the discharge capacity of each cell was determined. Next, the discharge capacity at 5 C was determined in the same manner, and a discharge capacity retention rate at 5C was calculated based on the discharge capacity at 0.1 C.
Charge conditions: 0.1 C, CC-CV 4.2 V (0.02 C cutoff)
Discharge conditions: 0.1 C or 5C, CC (3 V cutoff) Fast discharge capacity retention rate (%) = (5 C discharge capacity / 0.1 C discharge capacity) × 100

**[TABLE 3]**

| Table 3 | Polymer | Fast discharge capacity retention rate (%) |
|---|---|---|
| Example 1 | A1 | 75 |
| Comparative Example 1 | A2 | 67 |
| Comparative Example 2 | A3 | 57 |

As shown in Table 3, the coin cell of Example 1, which included the polymer A1 containing more than 95% by mass of the constitutional unit I, has a high fast discharge capacity retention rate, as compared to both the coin cells of Comparative Examples 1 and 2, which included the polymers A2 and A3 containing 95% by mass or less of the constitutional unit I, respectively. The results confirm that the use of the polymer A1 improves the fast discharge capacity retention rate of the power storage device that has the negative electrode containing the silicon-based negative electrode active material.

### Industrial Applicability

The polymer for a power storage device of the present disclosure can be used for, e.g., a variety of power storage devices.

## Claims

1. A polymer for a power storage device, comprising a constitutional unit represented by the following formula (I),
wherein a content of the constitutional unit of the formula (I) is more than 95% by mass: 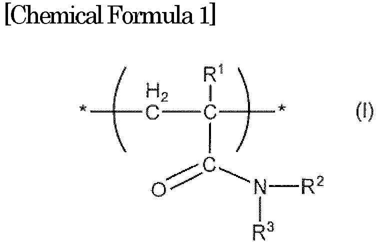 in the formula (I), R¹ represents a hydrogen atom or a methyl group, R² represents a hydrogen atom, a hydrocarbon group having 1 to 4 carbon atoms, or a straight- or branched-chain hydrocarbon group having 1 to 4 carbon atoms and 1 to 3 hydroxyl groups, and R³ represents a straight- or branched-chain hydrocarbon group having 1 to 4 carbon atoms and 1 to 3 hydroxyl groups.

2. The polymer according to claim 1, wherein the content of the constitutional unit of the formula (I) is 100% by mass.

3. A binder composition for a power storage device, comprising the polymer according to claim 1 or 2.

4. A paste for a negative electrode of a power storage device, comprising a silicon-based negative electrode active material and the polymer according to claim 1 or 2.

5. A negative electrode for a power storage device, comprising a current collector and a composite layer provided on the current collector,
wherein the composite layer contains a silicon-based negative electrode active material and the polymer according to claim 1 or 2.

6. A power storage device comprising the negative electrode according to claim 5.
